# EUROPEAN PATENT APPLICATION

(11) **EP 4 775 188 A1**
(43) Date of publication of application: **15.07.2026**
(21) Application number: 25224807.5
(22) Date of filing: 18.12.2025
(51) Int. Cl.: A61G 7/10

(54) **IMPROVED ATTACHMENT MECHANISMS FOR SLING BARS**

(30) Priority: 09.01.2025 US 202563743430 P
(71) Applicant: Liko Research & Development AB, 975 92 Luleå (SE)
(72) Inventor: KERSUZAN, Yoann, 975 92 Lulea (SE); LEMONNIER, Pascal, 975 92 Lulea (SE); KERZERHO, Eddy, 975 92 Lulea (SE); SCOLAN, Maxime, 975 92 Lulea (SE); JAFFRÉ, Thierry, 975 92 Lulea (SE); LE HENANF, Philippe, 975 92 Lulea (SE); LEGROS, Philippe, 975 92 Lulea (SE); BERNARD, Mathieu, 975 92 Lulea (SE); KERVADEC, Franck, 975 92 Lulea (SE); COU, Sebastien, 975 92 Lulea (SE)
(74) Representative: Reddie & Grose LLP

(57) **Abstract**

An attachment mechanism including a hook end portion; a hook portion extending from the hook end portion in an arcuate shape; a hook tip defining an end of the hook portion, the hook tip extending towards a first direction, wherein the hook tip, the hook portion, and the hook tip define a receiving aperture; a first protrusion extending longitudinally towards a second direction; and a second protrusion extending longitudinally in parallel to the first protrusion, the first protrusion connected to the second protrusion via an intermediary portion, wherein the first protrusion, the second protrusion, and the intermediary portion define a cavity.

## Description

The present specification generally relates to sling bars for assisting or lifting a person and, more specifically, attachment mechanisms and hooks for attaching a sling.

In the field of person lifting and mobility aids, lift systems such as motorized lifts are used to assist with lifting or repositioning people and objects. Lift systems may include sling bars (also known as spreader bars) to provide a secure and efficient link between the motorized lift and the sling on which a person or object is placed. Traditional methods for attaching slings to sling bars typically rely on hooks or other attachment mechanisms. While these mechanisms have been widely adopted, they present challenges in terms of practicality, reliability, and safety. Notably, hooks often feature crevices or intricate designs that are difficult to access and use easily. This can lead to confusion, complexity, false latchings of slings, and pinching/trapping of body parts during use.

For example, false latching can cause an unattached sling loop to falsely seem attached, leading to a possible point of failure during use. User confusion on how to use the attachment mechanism can lead to false or unsecured latchings that pose a safety risk to persons. Additionally, complex attachment mechanisms cause hesitation by users that may avoid using the lift system completely or deploy it slowly, where in a medical setting speed of use and deployment of medical equipment is of critical importance. Of course, these issues may also cause other types of attachment failures including accidental sling detachment that lead to injuries to persons. Attachment failures and false attachments (e.g., wrong sling placements) can also place undue strain on certain parts of the attachment mechanism causing the attachment mechanism to break due to incorrect use.

In one embodiment, an attachment mechanism includes a hook end portion; a hook portion extending from the hook end portion in an arcuate shape; a hook tip defining an end of the hook portion, the hook tip extending towards a first direction, wherein the hook tip, the hook portion, and the hook tip define a receiving aperture; a first protrusion extending longitudinally towards a second direction; and a second protrusion extending longitudinally in parallel to the first protrusion, the first protrusion connected to the second protrusion via an intermediary portion, wherein the first protrusion, the second protrusion, and the intermediary portion define a cavity.

In another embodiment, an attachment mechanism includes a hook end portion; a hook portion extending from the hook end portion in an arcuate shape; a hook tip defining an end of the hook portion, the hook tip extending towards a first direction, wherein the hook tip, the hook portion, and the hook tip define a receiving aperture; and a covering latch including a compression lid configured to be depressable into a crevice to place the receiving aperture in an open position.

In yet another embodiment, a sling bar includes a body including a first bar portion and a second bar portion, the first bar portion extending longitudinally in a first direction and the second bar portion extending longitudinally in a second direction; and a pair of attachment mechanisms at opposite ends of the body, wherein a first attachment mechanism of the pair of attachment mechanisms includes a hook end portion extending from the first bar portion; a hook portion extending from the hook end portion in an arcuate shape; a hook tip defining an end of the hook portion, the hook tip extending towards the first bar portion, wherein the hook tip, the hook portion, and the hook tip define a receiving aperture; a first protrusion extending longitudinally from a first end of an upper surface of the first bar portion, and away from the first bar portion; and a second protrusion extending longitudinally in parallel to the first protrusion, from a second end of the upper surface of the first bar portion, the first protrusion connected to the second protrusion via an intermediary portion, wherein the first protrusion, the second protrusion, and the intermediary portion define a cavity.

In yet another embodiment, a sling bar includes a body including a first bar portion and a second bar portion, the first bar portion extending longitudinally in a first direction and the second bar portion extending longitudinally in a second direction; and a pair of attachment mechanisms at opposite ends of the body, wherein a first attachment mechanism of the pair of attachment mechanisms includes a hook end portion extending from the first bar portion; a hook portion extending from the hook end portion in an arcuate shape; a hook tip defining an end of the hook portion, the hook tip extending towards the first bar portion, wherein the hook tip, the hook portion, and the hook tip define a receiving aperture; and a covering latch placed in the first bar portion, the covering latch including a compression lid configured to be depressable into a crevice of the first bar portion to place the receiving aperture in an open position.

In yet another embodiment, a person lifting system, includes a motor configured to lift a person; a sling bar configured to be attached to a sling for holding a person; wherein the sling bar includes at least one attachment mechanism at an end of the sling bar that includes a hook end portion; a hook portion extending from the hook end portion in an arcuate shape; a hook tip defining an end of the hook portion, the hook tip extending towards a first direction, wherein the hook tip, the hook portion, and the hook tip define a receiving aperture; a first protrusion extending longitudinally towards a second direction; and a second protrusion extending longitudinally in parallel to the first protrusion, the first protrusion connected to the second protrusion via an intermediary portion, wherein the first protrusion, the second protrusion, and the intermediary portion define a cavity.

In yet another embodiment, a person lifting system includes a lift member movable by a motor; a sling bar configured to be attached to a sling for holding a person; wherein the sling bar includes at least one attachment mechanism at an end of the sling bar that includes a hook end portion; a hook portion extending from the hook end portion in an arcuate shape; a hook tip defining an end of the hook portion, the hook tip extending towards a first direction, wherein the hook tip, the hook portion, and the hook tip define a receiving aperture; and a covering latch including a compression lid configured to be depressable into a crevice to place the receiving aperture in an open position.

The invention will now be further described by way of an example with reference to the accompanying drawings, in which:
FIG. 1 schematically depicts a front perspective view of a lift system including a sling bar that includes attachment mechanisms, according to one or more embodiments shown and described herein;
FIG. 2 schematically depicts a front perspective view of an attachment mechanism, according to one or more embodiments shown and described herein;
FIG. 3 schematically depicts a top view of the attachment mechanism of FIG. 2, according to one or more embodiments shown and described herein;
FIG. 4 schematically depicts a cross-sectional side view of the attachment mechanism of FIG. 2, according to one or more embodiments shown and described herein;
FIG. 5 schematically depicts a front perspective view of a double claw embodiment of the attachment mechanism, according to one or more embodiments shown and described herein;
FIG. 6 schematically depicts a front perspective view of an attachment mechanism with an attachment guard, according to one or more embodiments shown and described herein;
FIG. 7 schematically depicts a side view of the attachment mechanism with the attachment guard, according to one or more embodiments shown and described herein;
FIG. 8 schematically depicts a side view of the attachment mechanism of FIG. 6, with the attachment guard removed, according to one or more embodiments shown and described herein;
FIG. 9 schematically depicts a front perspective view of the attachment guard of the attachment mechanism of FIG. 6, according to one or more embodiments shown and described herein;
FIG. 10 schematically depicts a rear perspective view of the attachment guard of the attachment mechanism of FIG. 6, according to one or more embodiments shown and described herein;
FIG. 11 schematically depicts a top perspective view of a cross-bar configuration sling bar with attachment mechanisms, according to one or more embodiments shown and described herein;
FIG. 12 schematically depicts a top perspective view of a sling bar having covering latches, according to one or more embodiments shown and described herein;
FIG. 13 schematically depicts a front view of the covering latch of the attachment mechanisms of FIG. 12, according to one or more embodiments shown and described herein;
FIG. 14A schematically depicts a bottom perspective view of an attachment mechanism with a covering latch in an open configuration, according to one or more embodiments shown and described herein;
FIG. 14B schematically depicts a front view of an attachment mechanism with a covering latch in a closed configuration, according to one or more embodiments shown and described herein; and
FIG. 15 schematically depicts a top perspective view of a twin-bar configuration sling bar, according to one or more embodiments shown and described herein.

### DETAILED DESCRIPTION

Embodiments described herein are directed to attachment mechanisms for sling bars, used for securely attaching slings. The attachment mechanism can include a hook end portion, a hook portion extending from the hook end portion in an arcuate shape, a hook tip defining an end of the hook portion, the hook tip extending towards a first direction, wherein the hook tip, the hook portion, and the hook tip define a receiving aperture. In some embodiments the attachment mechanism can include embodiments utilizing a double claw or a covering latch. Various embodiments of the attachment mechanisms and the operation of the attachment mechanisms are described in more detail herein. Whenever possible, the same reference numerals will be used throughout the drawings to refer to the same or like parts.

Directional terms as used herein - for example, up, down, right, left, front, back, top, bottom - are made only with reference to the figures as drawn and are not intended to imply absolute orientation.

Unless otherwise expressly stated, it is in no way intended that any method set forth herein be construed as requiring that its steps be performed in a specific order, nor that with any apparatus specific orientations be required. Accordingly, where a method claim does not actually recite an order to be followed by its steps, or that any apparatus claim does not actually recite an order or orientation to individual components, or it is not otherwise specifically stated in the claims or description that the steps are to be limited to a specific order, or that a specific order or orientation to components of an apparatus is not recited, it is in no way intended that an order or orientation be inferred, in any respect. This holds for any possible non-express basis for interpretation, including: matters of logic with respect to arrangement of steps, operational flow, order of components, or orientation of components; plain meaning derived from grammatical organization or punctuation, and; the number or type of embodiments described in the specification.

As used herein, the singular forms "a," "an" and "the" include plural referents unless the context clearly dictates otherwise. Thus, for example, reference to "a" component includes aspects having two or more such components, unless the context clearly indicates otherwise.

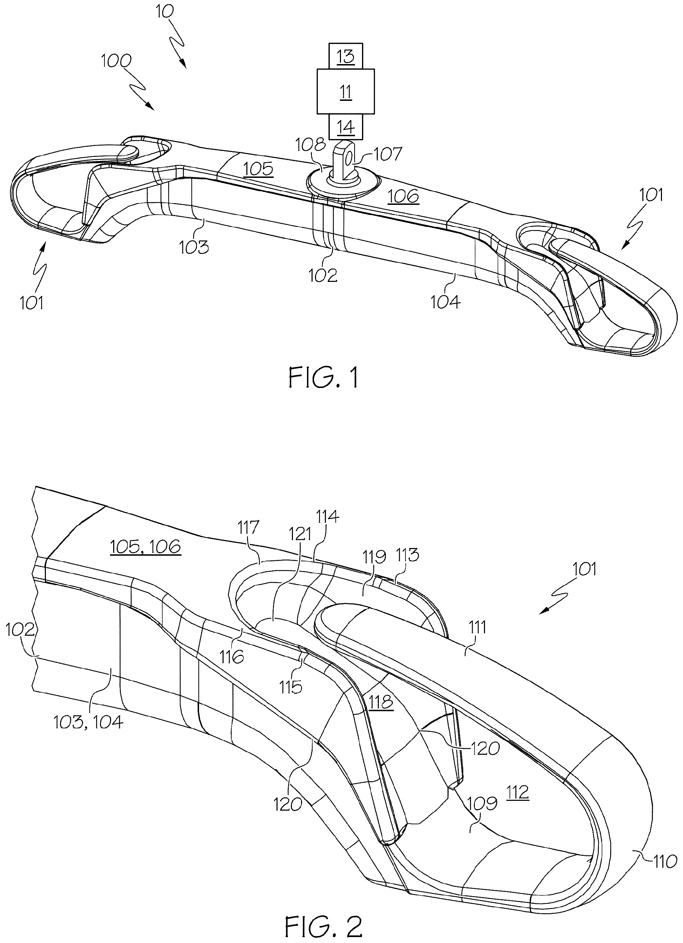

Referring now to FIG. 1, a lift system 10 is illustrated according to one or more embodiments described herein. In embodiments, the lift system 10 includes a lift member such as a lift beam and/or a lift strap 11 extending from a sling bar 100. In some embodiments, the lift strap 11 may extend between a lift arm, lift beam, or a lift unit 13 and the sling bar 100. The sling bar 100 may include a buckle 14 is provided at an end of the lift strap 11 opposite the lift beam or the lift unit 13. As shown, the buckle 14 engages a buckle receiver 107 mounted to a central upper portion 108 of the body 102 of the sling bar 100.

In embodiments, the lift unit 13 is operated, via a controller and a motor, to retract a portion of the lift strap 11 into the lift unit 13 or, alternatively, allow a portion of the lift strap 11 to extend out of the lift unit 13, thereby lifting or lowering the sling bar 100 relative to the lift unit 13. The sling bar 100 may be configured or designed for use with a lift system (e.g., a LikoGuard^{™} lift system) (not shown). The lift system may include a motor attached to a lift strap that is coupled to the sling bar 100, which may include attached slings for person or object placement. The motor may be operated to move or lift the sling bar 100 (and the attached sling) via the lift strap. The sling bar 100 includes attachment mechanisms 101 (e.g., attachment hooks for attaching slings) according to one or more embodiments shown and described herein. While the sling bar 100 and the attachment mechanisms 101 are described in relation to a lift system 10. it should be understood that the sling bar 100 and the attachment mechanisms 101 described herein may be used in conjunction with other types of lift systems, person and object mobility systems, transportation devices, manual lifts and systems, medical devices and systems, or mobile lifts such as the Viking^{™} series of mobile lifts, hoists cranes, winches, platforms, raisers, trolley or pulley systems and the like.

The sling bar 100 may generally include a body 102. The body 102 may include two sides or bar portions, a first bar portion 103 and a second bar portion 104 (referred to interchangeably herein as bar portions 103/104), where each of the bar portions 103/104 may be symmetrical to the other. The body 102 also includes a first upper surface 105 that extends across the first bar portion 103, and a second upper surface 106 that extends across the second bar portion 104 (referred to interchangeably herein as upper surface 105/106). The first bar portion 103 extends longitudinally towards a first direction, and the second bar portion 104 extends longitudinally towards a second direction, the first and second directions being opposite to each other.

Although not shown, it should be appreciated that the sling bar 100 is used to attach one or more slings or sling knots (not shown) from each of the attachment mechanisms 101. Slings (not shown) attached to the sling bar 100 via the attachment mechanisms 101 allow a person to be placed on the sling which may then be lifted by the lift system 10, the sling bar 100 may be attached to the lift system 10 via the buckle receiver 107 and thereby lifting or lowering the sling bar 100 and the attached sling(s) relative to the lift system 10. The buckle receiver 107 may be placed on a central upper portion 108 between the first upper surface 105 and the second upper surface 106, or on any other suitable location on the sling bar 100.

Referring now to FIG. 2, a portion of the sling bar 100 is shown that includes the attachment mechanism 101, according to one or more embodiments shown and described herein. As shown in FIG. 2, the attachment mechanism 101 extends from an upper surface 105/106 (the first upper surface 105 or the second upper surface 106 depending on what side the attachment mechanism 101 is on), and from a bar portion 103/104 of the body 102 of the sling bar 100 (the first bar portion 103 or the second bar portion 104 depending on the side the attachment mechanism 101 is on).

The attachment mechanism 101 includes a hook end portion 109 that extends out of the bar portion 103/104. The hook end portion 109 may extend curve or slope in a downwards direction, or at a slanted or diagonal direction away from the body 102 of the sling bar 100. The hook end portion 109 may include or be an extension of a margin or boundary of the bar portion 103/104. The hook end portion 109 may extend outwards and downwards from the bar portion 103/104.

In some embodiments, a hook portion 110 may extend from the hook end portion 109, and have an arcuate or other curved shape. The hook portion 110 may extend in a longitudinal direction away from the body 102 and from the hook end portion 109 and to curve in an upward direction. The hook portion 110 may then slightly curve towards the body 102. A hook tip 111 generally extends from the hook portion 110 towards the body 102. The hook end portion 109, the hook portion 110, and the hook tip 111 may together define a receiving aperture 112 for receiving a sling or a sling knot (not shown). The hook end portion 109, the hook portion 110, and the hook tip 111 may be of a flat shape as shown in FIG. 2, a cylindrical shape, or any other suitable shape.

In some embodiments, the attachment mechanism 101 includes a first protrusion 113 (e.g., a protruding portion), which extends longitudinally from the body 102. In some embodiments, the first protrusion 113 extends from a first end 114 of the upper surface 105/106 of the bar portion 103/104, and away from the bar portion 103/104. In some embodiments, the attachment mechanism 101 also includes a second protrusion 115 (e.g., a protruding portion) that extends longitudinally, from a second end 116 of the upper surface 105/106 of the bar portion 103/104. The first protrusion 113 may be connected to the second protrusion 115 via an intermediary portion 117, wherein the first protrusion 113, the second protrusion 115, and the intermediary portion 117 together define a cavity 118. The first protrusion 113 and second protrusion 115 may be parallel to each other.

In some embodiments, each of the first protrusion 113 and the second protrusion 115 extend downwards and connect to one or more points or ends of a marginal perimeter 120 of the bar portion 103/104, forming portions of a cavity side wall 119 that defines the depth and boundary of the cavity 118. The intermediary portion 117 extends downwards towards an interior central portion 121 to define a connecting portion of the cavity side wall 119. For example, as is shown in FIG. 2, the first protrusion 113 extends downwards to connect to a first end of the marginal perimeter 120, and the connection forming a portion of the cavity side wall 119. The marginal perimeter 120 may be one or more locations on the upper surface 105/106 that may correspond to an edge or end of the bar portion 103/104.

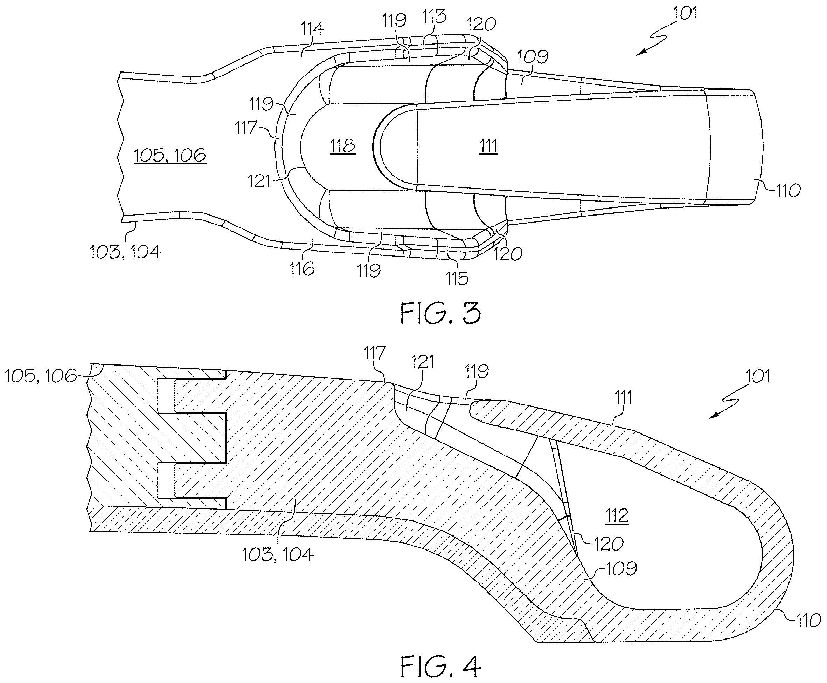

Referring now to FIG. 3, a top view of the attachment mechanism 101 is shown. The cavity 118 is defined by the first protrusion 113 connected to the second protrusion 115 via the intermediary portion 117 on the upper surface 105/106 of the bar portion 103/104 of the body 102 of the sling bar 100. A portion of the cavity side wall 119 is formed by the first protrusion 113 extending downwards to the marginal perimeter 120 to form a first connection. Another portion of the cavity side wall 119 is formed by the intermediary portion 117 extending downwards to the interior central portion 121 that forms a second connection. A third portion of the cavity side wall 119 is formed by the second protrusion 115 extending downwards to the marginal perimeter 120 of the bar portion 103/104 to form a third connection. The portion of the cavity side wall 119 of the second protrusion connects to the portion of the cavity side wall 119 from the intermediary portion 117, which in turn connects to the portion of the cavity side wall 119 from the first protrusion 113. The cavity side wall 119 together with the first protrusion 113, the second protrusion 115, the intermediary portion 117, and the hook tip 111 define an outline and depth of the cavity 118.

The first protrusion 113 generally extends from the first end 114 of the upper surface 105/106 and away from the bar portion 103/104 for a predefined length. The second protrusion 115 extends in parallel to the first protrusion 113, from a second end 116 of the upper surface 105/106 of the bar portion 103/104 for the predefined length. The first protrusion 113 and the second protrusion 115 surround a portion of the hook tip 111, e.g., for a specific length and the hook tip 111 extends into at least a portion of the cavity 118. The extension of the hook tip 111 into the cavity 118 (at least partially) and being surrounded by the protrusions 113, 115 makes it more difficult to accidentally unlatch or remove a sling that is latched into the attachment mechanism 101, e.g., in the receiving aperture 112. The length the hook tip 111 extends into the cavity 118, or the length that the protrusions 113, 115 surround the hook tip 111 may be adjusted, for example, by varying the hook tip 111 length or by adjusting the length that the first protrusion 113 and the second protrusion 115 extend outwards in a longitudinal direction away from the body 102.

Referring now to FIG. 4, a cross-sectional side view of the attachment mechanism 101 is shown. As described above the attachment mechanism 101 extends out of the bar portion 103/104 which has a corresponding upper surface 105/106. In the cross-sectional side view of FIG. 4, it can be seen that the hook end portion 109 extends downwardly in a slanted direction away from and out of the bar portion 103/104. The hook portion 110 extends from the hook end portion 109, first in a longitudinal direction prior to curving upwards and then back towards the bar portion 103/104. The hook tip 111 extends from the hook portion 110 towards the bar portion 103/104.

The receiving aperture 112 is defined by the hook end portion 109, the hook portion 110, and the hook tip 111 and opens to the cavity 118. An edge of the cavity side wall 119 is visible from this side view. Furthermore, the intermediary portion 117 can be seen on the edge of the upper surface 105/106 opening into the cavity 118. The intermediary portion 117 extends downwards to the interior central portion 121 of the bar portion 103/104 to form a portion of the cavity side wall 119.

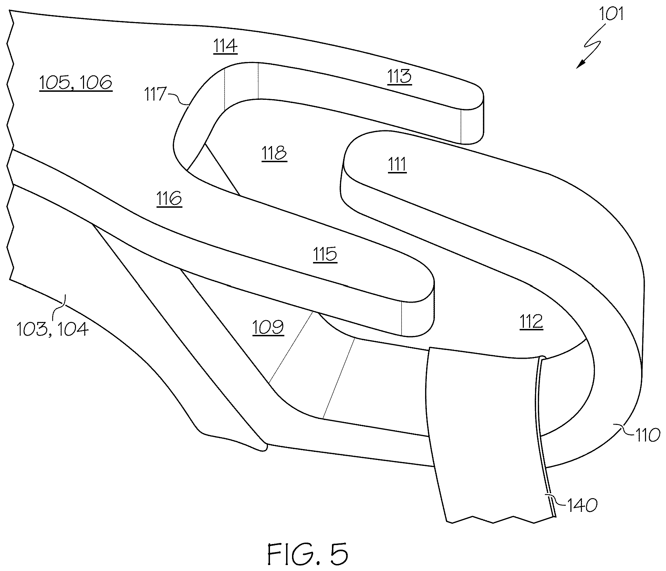

Referring now to FIG. 5, a variation of the attachment mechanism 101 is shown, referred to herein as the "double claw" embodiment. The attachment mechanism 101 with the double claw embodiment includes substantially the same components as those shown in FIGS. 1-4, which are not repeated in the interests of brevity. However, a sling 140 is shown attached in the receiving aperture 112.

Unlike the embodiments in FIGS. 1-4, the first protrusion 113 and the second protrusion 115 do not extend downward to form a cavity sidewall but only extend outwards and longitudinally from and out of the upper surface 105/106 of the bar portion 103/104. In FIG. 5, the first protrusion 113 may be a first protruding member and may extend out as such, and the second protrusion 115 may be a second protruding member and extend out as such, and these protrusions 113, 115 are only connected to each other via the intermediary portion 117. The first protrusion 113 extends from a first end 114 of an upper surface 105/106 of the bar portion 103/104, and away from the bar portion 103/104. The second protrusion 115 extends from a second end 116 of an upper surface 105/106 of the bar portion 103/104, and away from the bar portion 103/104. The first protrusion 113 and second protrusion 115 may be parallel to each other in a "double claw" formation.

The hook tip 111, the first protrusion 113, and the second protrusion 115 define the cavity 118 for insertion of a sling 140 into the receiving aperture 112. The lack of the side wall provides the sling 140 with additional maneuverability within the receiving aperture 112 due to the additional space available within the receiving aperture 112 compared to the attachment mechanism 101 as shown in FIGS. 1-4.

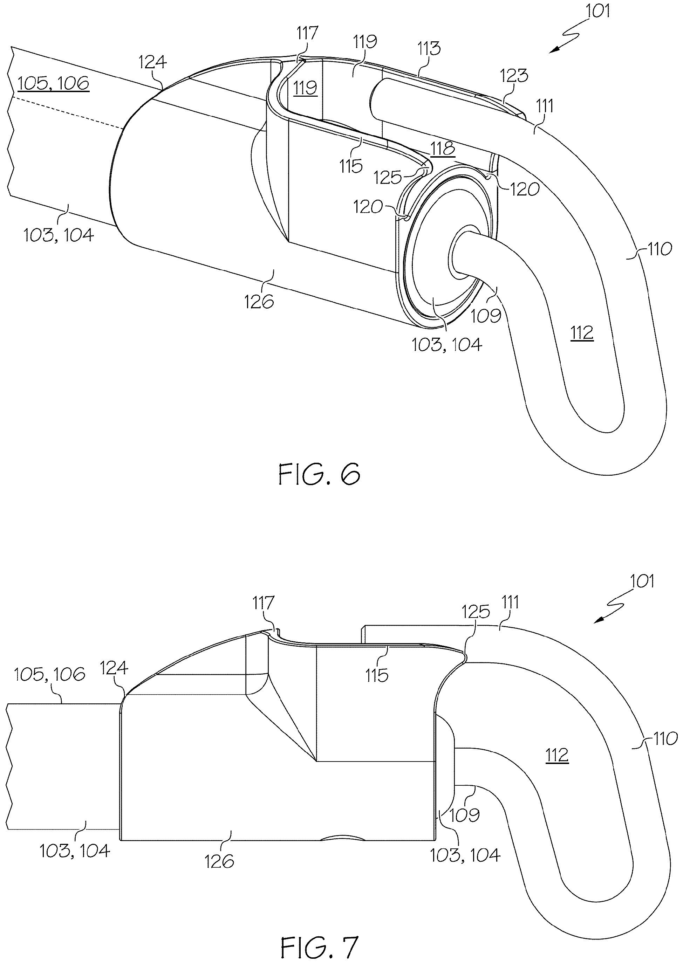

Referring now to FIGS. 6-7, another embodiment of the attachment mechanism 101 is shown with an attachment guard 126. In some embodiments, the attachment mechanisms 101 may include cylindrical features, and can include a first prominence 123 and a second prominence 125 (prominences 123, 125). Similarly to what is shown in FIG. 1-4, the attachment mechanism 101 includes a hook end portion 109 that extends out of the bar portion 103/104, a hook portion 110 that extends from the hook end portion 109 and a hook tip 111 that extends form the hook portion 110. The hook end portion 109, hook portion 110, and the hook tip 111 together define the receiving aperture 112. Unlike the flat shape of the aforementioned in FIG. 1-5. In some embodiments, the shape of the hook end portion 109, hook portion 110, and the hook tip 111 are of a cylindrical shape.

The shape of the hook end portion 109, the hook portion 110, the hook tip 111, or combinations thereof, of the embodiments of FIGS. 6-7, may differ to those of the embodiments of FIGS. 1-5. For example, a shape of the hook end portion 109 in the embodiments of FIGS. 6-7 may include a steeper downward curvature followed by a hook portion 110 with a correspondingly steeper upward curvature relative to the hook end portion 109 and the hook portion 110 of the embodiments of FIGS. 1-5. Furthermore, the embodiments of FIGS. 1-5 may include a flatter transition between the hook end portion 109 and the hook portion 110, and the embodiments of FIGS. 6-7 may include a relatively shorter transition between the hook end portion 109 and the hook portion 110.

The attachment mechanism 101 also includes the first protrusion 113, the second protrusion 115, and the intermediary portion 117. However, in FIGS. 6-7, the first protrusion 113 the second protrusion 115, and the intermediary portion 117 extend from a central point 124 on the upper surface 105/106. The central point 124 may extend out and upwards and in a longitudinal direction towards the hook tip 111 before widening into a rim including the first protrusion 113, the intermediary portion 117, and the second protrusion 115 as well as the cavity side wall 119. In some embodiments, these aforementioned components form parts of the attachment guard 126. The attachment guard 126 may be a separate piece, e.g., a modular component that may be added onto the bar portion 103/104 or may be molded as a one-piece part of or extending from the bar portion 103/104.

Similar to FIGS. 1-4, the cavity side wall 119 is formed by the first protrusion 113, the second protrusion 115, and the intermediary portion 117 all extending downward to connect to the marginal perimeter 120 (or the interior central portion 121 in case of the intermediary portion 117) of the attachment guard 126. In some embodiments, the marginal perimeter 120 aligns with the perimeter of an edge of the bar portion 103/104 but is part of a separate component, e.g., part of the attachment guard 126. Alternatively, the cavity side wall 119 can be a modular component that is added to the first protrusion 113, the second protrusion 115, and the intermediary portion 117 to fit on the upper surface 105/106 of the bar portion 103/104.

In some embodiments, the first protrusion 113 includes the first prominence 123, and the second protrusion 115 includes the second prominence 125. The prominences 123, 125 may be separate portions or may be extensions out of the protrusions 113, 115. The prominences 123, 125 may extend in any direction to surround a portion of the hook tip 111 and enclose a larger portion of the hook tip 111 to minimize the likelihood of accidental detachment or unlatching of the sling 140 (not shown) from the receiving aperture 112 and the attachment mechanism 101. The first prominence 123 and the second prominence 125 may be of various shapes and sizes, for example, a prominence may be pointed or may have a spherical shape, may extend across only to a portion of the hook tip 111, or extend over it completely.

Referring now to FIG. 7, in some embodiments, the hook tip 111 may rise above the top end of the protrusions, e.g., rises above the top portion of the second protrusion 115. In some embodiments however, the hook tip 111 may be completely covered by the first protrusion 113, or the second protrusion 115. As can be seen in FIG. 7, the height of the hook tip 111 is at or below the intermediary portion 117. For example, as depicted in FIG. 7, the intermediary portion 117 may have a raised tip above or at the same level of the hook tip 111. The raised tip of the intermediary portion 117 extends downwards and outwards to connect to the first protrusion 113 and second protrusion 115.

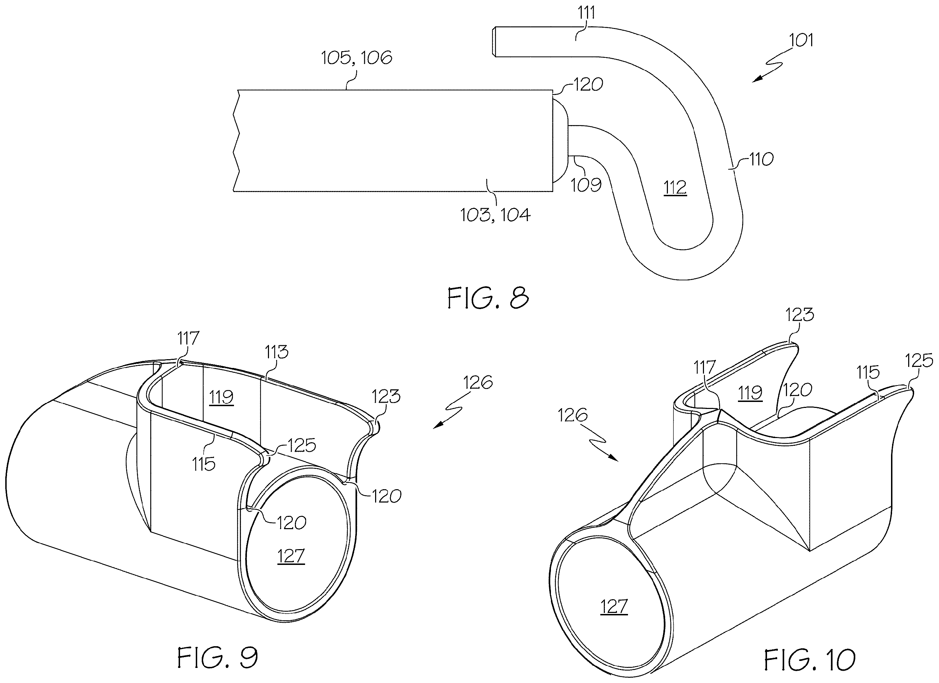

Referring now to FIG. 8, a side view of the attachment mechanism 101 of FIGS. 6-7 is shown with the attachment guard 126 removed. The bar portion 103/104 includes the upper surface 105/106. The hook end portion 109 extends from the bar portion 103/104 into the hook portion 110 which extends into the hook tip 111. The hook end portion 109, the hook portion 110, and the hook tip 111 define the receiving aperture 112 and are of a cylindrical shape. The marginal perimeter 120 of the bar portion 103/104 is also shown on one end.

Referring now to FIGS. 9-10, front and rear perspective views of the attachment guard 126 are shown. As described with reference to FIG. 7, the attachment guard 126 may be a separate independent piece or component to the attachment mechanism 101, or it may be part of the bar portion 103/104 and formed out of the same piece. The attachment guard 126 may include a hollow portion 127 to surround the bar portion 103/104 and to position the attachment guard 126 to the correct depth on the bar portion 103/104, e.g., to align a perimeter of the attachment guard 126 with the marginal perimeter 120 of the bar portion 103/104 or of the attachment guard 126.

In some embodiments, it can be seen that the attachment guard 126 includes the first protrusion 113 that connects in a downwards direction to a first end of the marginal perimeter 120 of the attachment guard 126 to form a first connection, the second protrusion 115 connects in a downward direction to a second end of the marginal perimeter 120 of the attachment guard 126 to form a second connection, and the intermediary portion 117 connects in a downwards direction to an interior central portion (not shown) of the attachment guard 126 to form a third connection, and wherein the first connection and the second connection are connected via the third connection to define the cavity side wall 119. In some embodiments, the first prominence 123 extends out of the first protrusion 113, and the second prominence 125 can be seen extending out of the second protrusion 115.

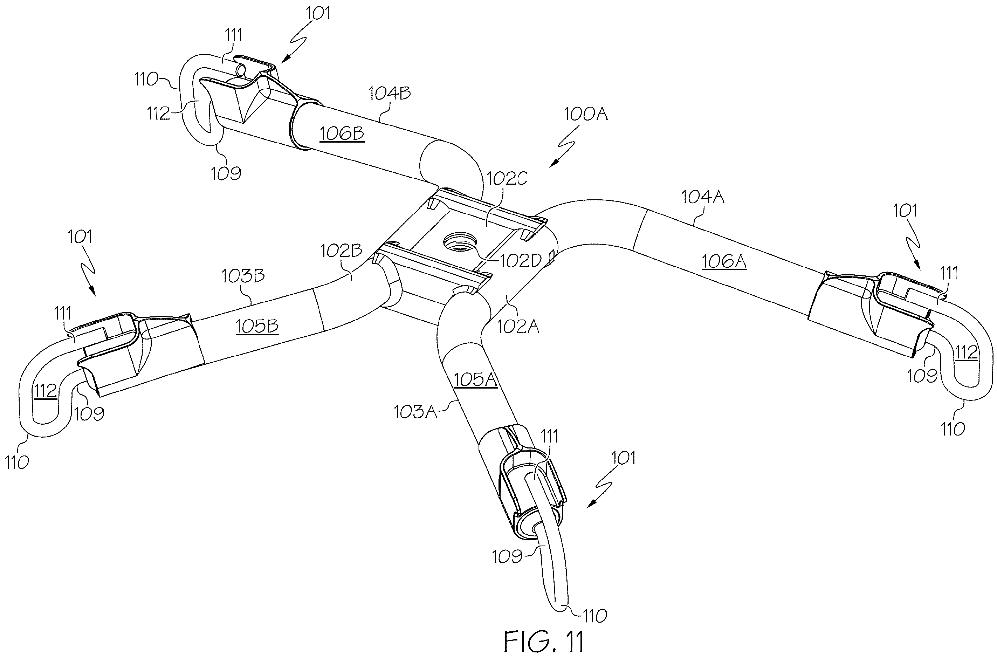

Referring now to FIG. 11, a cross-bar configuration sling bar 100A with attachment mechanisms 101 is illustrated according to one or more embodiments described herein. In embodiments, the cross-bar configuration sling bar 100A includes multiple attachment mechanisms 101 at different ends of the cross-bar configuration sling bar 100A to provide additional attachment points for slings, with the attachment mechanisms 101 being placed on additional ends of the cross-bar configuration sling bar 100A.

The cross-bar configuration sling bar 100A includes a first body 102A comprising a first bar portion 103A and a second bar portion 104A. The cross-bar configuration sling bar 100A also includes a second body 102B with a third bar portion 103B and a fourth bar portion 104B. Any of the first body 102A or the second body 102B may correspond to a curved bar, or other shape that may include curvatures or angular structures. Moreover, any of the first body 102A or the second body 102B may include multiple ends where each end includes one attachment mechanism 101. The various bar portions 103A, 104A, 103B, and 104B may extend towards the same or different directions.

The first body 102A also includes a first upper surface 105A that extends across the first bar portion 103A, and a second upper surface 106A that extends across the second bar portion 104A (referred to interchangeably herein as upper surface 105A/106A). The second body 102B also includes a third upper surface 105B that extends across the third bar portion 103B, and a fourth upper surface 106B that extends across the fourth bar portion 104B (referred to interchangeably herein as upper surface 105A/106A).

In embodiments, the first bar portion 103A and the second bar portion 104A extend in different directions from one another. For example, the first bar portion 103A extends in a first direction and the second bar portion 104A extends in a second direction (e.g., lateral or longitudinal directions). In embodiments, the third bar portion 103B and the fourth bar portion 104B of the second body 102B extend in different directions from one another. In embodiments, each of the first bar portion 103A, the second bar portion 104A, the third bar portion 103B, and the fourth bar portion 104B extend in different directions from one another.

It is to be understood that the attachment mechanisms 101 at the various different ends of first body 102A or the second body 102B of the cross-bar configuration sling bar 100A each correspond to any of the attachment mechanisms 101 or 101B (described below), the details of which are not repeated for brevity. For example, each of the attachment mechanisms 101 may include the hook end portion 109 extending from the respective bar portion (e.g., 103A, 104A, 103B, 104B) as well as the hook portion 110, and the hook tip 111 which together define the receiving aperture 112. In embodiments, the attachment mechanisms 101 may also include the attachment guard 126 or a covering latch.

In embodiments, the first body 102A and the second body 102B are coupled to each other via a central coupling mechanism 102C. The central coupling mechanism 102C may include an aperture 102D for installation or attachment of the buckle receiver 107 (FIG. 1). For example, the buckle receiver 107 may be used to attach the cross-bar configuration sling bar 100A to the lifting system 10.

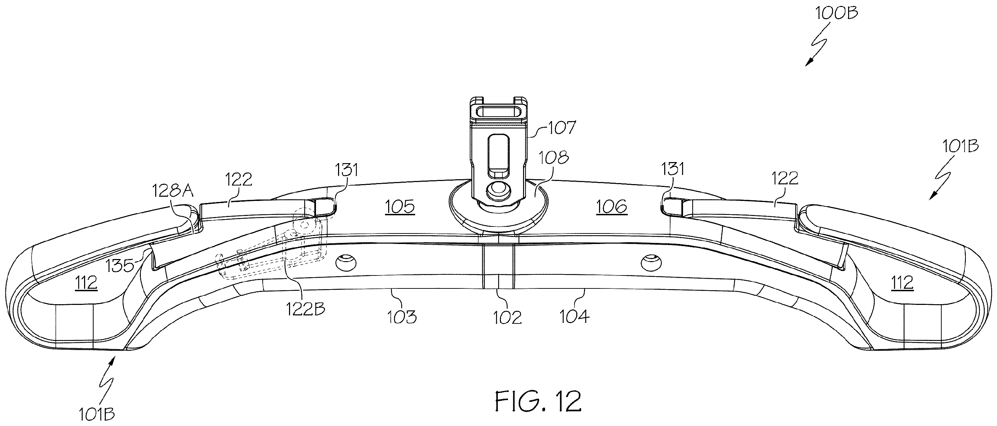

Referring now to FIG. 12, a sling bar 100B may be a variation of the sling bar 100 of FIG. 1 having attachment mechanisms 101B that include a covering latch 122 to provide additional security. The reference numbers used herein in relation to the sling bar 100B will be substantially similar to those used in relation to the sling bar 100 of FIG. 1. However, elements that are new or that depart from those of the sling bar 100 will referred to with different reference numbers.

Similar to the sling bar 100 and its configuration within the lift system 10, the sling bar 100B may form a lift system (not shown) in combination with the buckle 14, the lift unit 13, and the lift strap 11 (FIG. 1). The sling bar 100B may include the buckle receiver 107 mounted to a central upper portion 108 of the body 102 of the sling bar 100B to engage the buckle 14. The sling bar 100B may be configured or designed for use with a lift system (e.g., a LikoGuard^{™} lift system) (not shown). The lift system and the manner it engages with the sling bar 100B may be substantially similar to the lift system 10 and its engagement with the sling bar 100 (the details of which are not duplicated for brevity).

The sling bar 100B may generally include a body 102. The body 102 may include two sides or bar portions, such as a first bar portion 103 and a second bar portion 104, where each of the bar portions 103/104 may be symmetrical to the other. The body 102 also includes a first upper surface 105 that extends across the first bar portion 103, and a second upper surface 106 that extends across the second bar portion 104 (referred to interchangeably herein as upper surface 105/106). The first bar portion 103 extends longitudinally towards a first direction, and the second bar portion 104 extends longitudinally towards a second direction, the first and second directions being opposite to each other.

Although not shown, it should be appreciated that the sling bar 100B is used to attach one or more slings or sling knots (not shown) from each of the attachment mechanisms 101B. Slings attached to the sling bar 100B via the attachment mechanisms 101B allow a person to be placed on the sling which may then be lifted by the lift system 10 (FIG. 1), the sling bar 100B may be attached to a lift system 10 (e.g., via a buckle receiver 107) and thereby lifting or lowering the sling bar 100B and the attached sling(s) relative to the lift system 10. The buckle receiver 107 may be placed on a central upper portion 108 between the first upper surface 105 and the second upper surface 106, or on any other suitable location on the sling bar.

The attachment mechanism 101B also includes the covering latch 122. The covering latch 122 may be placed substantially on the body 102 (e.g., on the first upper surface 105 or the second upper surface 106 of the first bar portion 103 or the second bar portion 104, respectively). The covering latch 122 may also be placed at least in part, within a crevice 131 formed in the upper surface 105/106 of the body 102. A portion 122B of one of the covering latches 122 positioned within the crevice 131 is illustrated in dashed lines. The portion 122B may be permanently fixed within the crevice 131, while other portions of the covering latch 122 remain permanently outside the crevice 131 in all configurations. Yet other portions of the covering latch 122 may at times be placed or pressed into the crevice 131 and at other times be positioned outside the crevice 131.

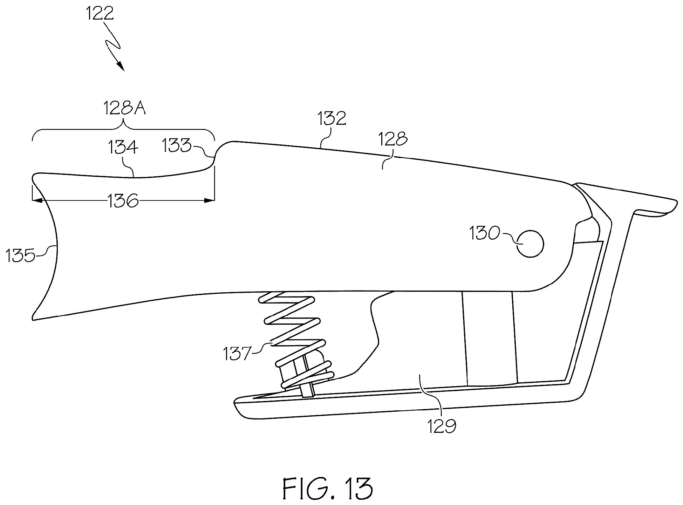

Referring now to FIG. 13, a front view of the covering latch 122 of the attachment mechanisms 101B of FIG. 12 is shown. The covering latch 122 may be used to secure a sling to the attachment mechanism 101B. In embodiments, the covering latch 122 includes a compression lid 128 coupled to a base 129 via an attachment portion 130. The compression lid 128 may articulate with the attachment portion 130 as it is pressed causing the compression lid 128 to depress against the base 129. The attachment portion 130 may be spring loaded or otherwise include one or more springs 137 to allow articulation of the compression lid 128.

In embodiments, the compression lid 128 includes an upper surface 132 that extends until it reaches a vertical drop 133, which in turn continues until it reaches a lower surface 134 of the compression lid 128. The shape of the vertical drop 133 and the lower surface 134 may be configured to receive a hook tip or a portion of the hook tip 111. The lower surface 134 may extend to an aperture closure 135. In embodiments, the compression lid 128 is connected to or supported by the spring 137. A portion of the vertical drop 133 alone or in combination with the lower surface 134 may form a fitted portion 128A to be inserted into a recess of an underside of the hook tip as described below.

In embodiments, the covering latch 122 is a separate component of the attachment mechanism 101B or the sling bar 100B and may be removed or installed based on user preference. For example, the sling bar 100B may be converted into the sling bar 100 (FIG. 1) by removing the covering latch 122. In embodiments, the covering latch 122 is permanently affixed and part of the attachment mechanism 101B and cannot be removed. The configuration of the covering latch 122 places the receiving aperture 112 of the attachment mechanism 101B in an open or closed position.

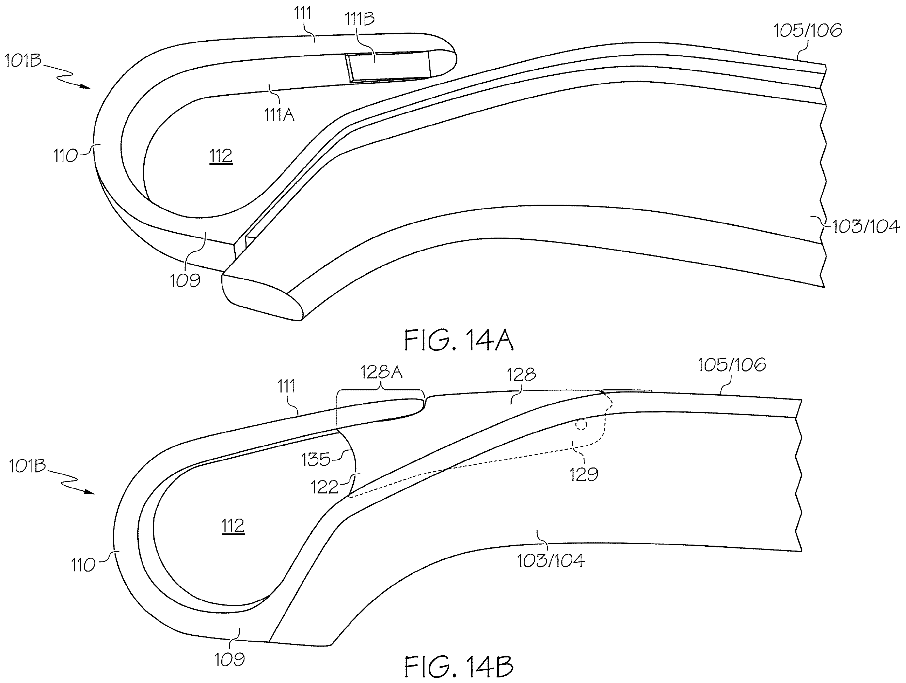

Now with reference to FIGS. 14A and 14B, which schematically depicts a bottom perspective view of the attachment mechanism 101B of FIG. 12 in an open configuration, and a front view of the attachment mechanism 101B in a closed configuration, respectively. The attachment mechanism 101B extends from an upper surface 105/106 of the sling bar 100B (e.g., the first upper surface 105 or the second upper surface 106 depending on what side the attachment mechanism 101B is on), and from a bar portion 103/104 of the sling bar 100B (e.g., the first bar portion 103 or the second bar portion 104 depending on the side the attachment mechanism 101B is on).

The attachment mechanism 101B includes a hook end portion 109 that extends out of one the bar portion 103/104 of the body 102 of the sling bar 100B. The hook end portion 109 may curve or slope in a downwards direction, or at a slanted or diagonal direction away from the body 102 of the sling bar 100B. The hook end portion 109 may include or be an extension of a margin or boundary of the bar portion 103/104 of the body 102 of the sling bar 100B. The hook end portion 109 may extend outwards and downwards from the bar portion 103/104. The hook end portion 109, the hook portion 110, and the hook tip 111 define the receiving aperture 112 (e.g., used for the attachment of slings).

An underside 111A of the hook tip 111 may include a shaped recess 111B. The shaped recess 111B may be shaped to receive a fitted portion 128A of the covering latch 122. The fitted portion 128A may include at least a portion of the lower surface 134 in combination with at least a portion of the vertical drop 133). The received portion of the covering latch 122 may therefore be securely fixed in place by sitting within the recess preventing movement of the covering latch 122 and accidental dislodging of a sling within the receiving aperture 112.

Referring to FIG. 14A, the attachment mechanism 101B is depicted in an open position, where the covering latch 122 is depressed into the bar portion 103/104 (and thus is not visible) opening the receiving aperture 112 to receive a sling. Referring to FIG. 14B, the attachment mechanism 101B is depicted in a closed position. FIG. 14B also depicts the covering latch 122 with the base 129 (as illustrated by dashed lines) affixed inside the bar portion 103/104, while the compression lid 128 is raised and pressed against the underside 111A of the hook tip 111 (e.g., protruding or slotting into the shaped recess 111B). The raised compression lid 128 of the covering latch 122 places the attachment mechanism 101B in a closed position. In embodiments, the compression lid 128 is raised into and is at least partially nestled within the shaped recess 111B.

When the covering latch 122 is in a closed position (as depicted in FIG. 14B), a sling or other attachment that is attached to the receiving aperture 112 cannot be unlatched or released as it cannot escape the receiving aperture 112 with the compression lid 128 covering an opening of the receiving aperture 112 (e.g., via the aperture closure 135). Conversely, when the compression lid 128 is depressed (as depicted in FIG. 14A), the compression lid 128 is pushed down into the crevice 131 (FIG. 12) opening the receiving aperture 112 and placing the attachment mechanism 101B in an open position (e.g., to allow the attachment of slings into the receiving aperture 112).

As is shown in FIG. 14B, when the attachment mechanism 101B is in a closed position that covers the opening of the receiving aperture 112, a portion of the underside 111A of the hook tip 111 (e.g., the shaped recess 111B) receives a portion of the compression lid 128. In some embodiments, the compression lid 128 of the covering latch 122 includes an upper surface 132 that extends until it reaches a vertical drop 133 which in turn continues until it reaches a lower surface 134 of the compression lid 128. The combination of the vertical drop 133 and the lower surface 134 may therefore form a receiving end that receives the hook tip 111 or a portion of a hook tip 111 of a first length 136. The lower surface 134 is the portion of the compression lid 128 received by the underside 111A, and may continue until the aperture closure 135. The aperture closure 135 may cover an opening of the receiving aperture 112 to prevent accidental unlatching of a sling 140 from the attachment mechanism 101.

In some embodiments, the first length 136 may correspond with the length of the lower surface 134. However, in some aspects the length of the lower surface 134 and the first length are independent, and the first length depends on the positioning of the hook tip 111 or on the length of the hook tip 111 or the portion received by the compression lid 128. For example, the first length 136 may be at least 18 millimeters, or it may be at least 28 millimeters.

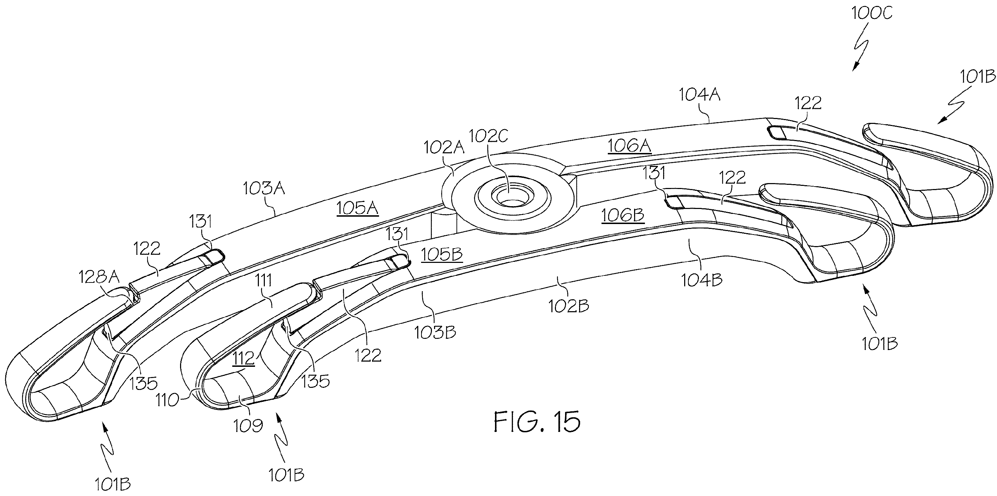

Referring now to FIG. 15, which depicts a top perspective view of a twin-bar configuration sling bar 100C. The twin-bar configuration sling bar 100C may be a variation of the sling bar 100B of FIG. 12 that combines two of the sling bar 100B in parallel. FIG. 15 depicts two of the covering latches 122 in a closed position and two of the covering latches 122 in an open position. In embodiments, the twin-bar configuration sling bar 100C includes multiple attachment mechanisms 101B at different ends of the twin-bar configuration sling bar 100C to provide additional attachment points for slings, with the attachment mechanisms 101B being placed on additional ends of the cross-bar configuration sling bar 100A. It is to be understood that that the twin-bar configuration sling bar 100C may utilize any of the attachment mechanisms 101 or 101B described herein. In embodiments, the twin-bar configuration sling bar 100C may combine two of the sling bar 100 in a twin-bar configuration or one sling bar 100 and one sling bar 100B in a twin-bar configuration.

The twin-bar configuration sling bar 100C includes a first body 102A having a first bar portion 103A and a second bar portion 104A. The twin-bar configuration sling bar 100C also includes a second body 102B with a third bar portion 103B and a fourth bar portion 104B. Any of the first body 102A or the second body 102B may include multiple ends where each end includes one attachment mechanism 101B.

In embodiments, the first bar portion 103A and the second bar portion 104A extend in different directions from one another (e.g., longitudinally extend in opposite directions). For example, the first bar portion 103A extends in a first direction and the second bar portion 104A extends in a second direction. In embodiments, the third bar portion 103B and the fourth bar portion 104B of the second body 102B extend in different directions from one another (e.g., longitudinally extend in opposite directions). In embodiments, the first bar portion 103A and the third bar portion 103B extend towards the same direction but are parallel to one another (e.g., they extend in parallel in the same direction). Similarly, the second bar portion 104A and the fourth bar portion 104B extend towards the same direction in parallel to one another.

The first body 102A also includes a first upper surface 105A that extends across the first bar portion 103A, and a second upper surface 106A that extends across the second bar portion 104A (referred to interchangeably herein as upper surface 105A/106A). The second body 102B also includes a third upper surface 105B that extends across the third bar portion 103B, and a fourth upper surface 106B that extends across the fourth bar portion 104B (referred to interchangeably herein as upper surface 105A/106A).

In some embodiments, the attachment mechanisms 101B correspond to the attachment mechanisms 101B of FIG. 12 and include the covering latch 122. In embodiments, the attachment mechanisms 101B correspond to any of the attachment mechanisms 101 described herein, the details of which are not repeated for brevity. For example, each of the attachment mechanisms 101B may include the hook end portion 109 extending from the respective bar portion (e.g., 103A, 104A, 103B, 104B) as well as the hook portion 110, and the hook tip 111 which together define the receiving aperture 112.

In embodiments, the first body 102A and the second body 102B are coupled to each other via a central coupling mechanism 102C. The central coupling mechanism 102C may include an aperture 102D for installation or attachment of the buckle receiver 107. For example, the buckle receiver 107 may be used to attach the cross-bar configuration sling bar 100B to the lifting system 10 or other lifting systems. In embodiments, the first body 102A and the second body 102B are of different lengths. For example, the first body 102A is longer than the second body 102B. Embodiment of the invention can be described with reference to the following numbered clauses, with preferred features laid out in the dependent clauses:
Clause 1. An attachment mechanism including a hook end portion; a hook portion extending from the hook end portion in an arcuate shape; a hook tip defining an end of the hook portion, the hook tip extending towards a first direction, wherein the hook tip, the hook portion, and the hook tip define a receiving aperture; a first protrusion extending longitudinally towards a second direction; and a second protrusion extending longitudinally in parallel to the first protrusion, the first protrusion connected to the second protrusion via an intermediary portion, wherein the first protrusion, the second protrusion, and the intermediary portion define a cavity.
Clause 2. The attachment mechanism of Clause 1, wherein the first protrusion is a first protruding member, and the second protrusion is a second protruding member.
Clause 3. The attachment mechanism of any of Clauses 1-2, wherein the hook tip has at least one of a flat shape or a cylindrical shape.
Clause 4. The attachment mechanism of any of Clauses 1-3, wherein the hook tip extends at least partially into the cavity.
Clause 5. The attachment mechanism of any of Clauses 1-4, wherein each of the first protrusion and the second protrusion surround a portion of the hook tip.
Clause 6. The attachment mechanism of any of Clauses 1-5, wherein the first protrusion connects in a downwards direction to a first end of a marginal perimeter to form a first connection; the second protrusion connects in a downwards direction to a second end of the marginal perimeter to form a second connection; the intermediary portion connects in a downwards direction to at an interior central portion to form a third connection; and the first connection and the second connection are connected via the third connection to define a cavity side wall of the cavity.
Clause 7. The attachment mechanism of any of Clauses 1-6, wherein the first protrusion includes a prominence extending longitudinally beyond a first end of the cavity side wall; and the second protrusion includes a prominence extending longitudinally beyond a second end of the cavity side wall.
Clause 8. An attachment mechanism including a hook end portion; a hook portion extending from the hook end portion in an arcuate shape; a hook tip defining an end of the hook portion, the hook tip extending towards a first direction, wherein the hook tip, the hook portion, and the hook tip define a receiving aperture; and a covering latch including a compression lid configured to be depressable into a crevice to place the receiving aperture in an open position.
Clause 9. The attachment mechanism of Clause 8, wherein the arcuate shape defines the hook portion extending downwardly followed by curving upwardly.
Clause 10. The attachment mechanism of any of Clauses 8-9, wherein the hook tip has at least one of a flat shape or a cylindrical shape.
Clause 11. The attachment mechanism of any of Clauses 8-10, wherein the covering latch further includes a base affixed inside the crevice, wherein the compression lid is coupled onto the base via an attachment portion of the covering latch.
Clause 12. The attachment mechanism of any of Clauses 8-11, wherein the attachment portion includes a spring configured to allow depression of the compression lid onto the base.
Clause 13. The attachment mechanism of any of Clauses 8-12, wherein the compression lid includes a receiving end, wherein the receiving end is configured to receive at least one portion of the hook tip.
Clause 14. The attachment mechanism of any of Clauses 8-13, wherein releasing the compression lid causes the receiving end to receive a portion of the hook tip and place the receiving aperture in a closed position.
Clause 15. The attachment mechanism of any of Clauses 8-14, wherein an underside of the hook tip includes a crevice shaped to allow the receiving end of the compression lid to at least partially slot into the crevice to securely maintain the closed position.
Clause 16. The attachment mechanism of any of Clauses 8-15, wherein a length of the at least one portion of the hook tip is at least 18 millimeters or at least 28 millimeters.
Clause 17. A sling bar including a body including a first bar portion and a second bar portion, the first bar portion extending longitudinally in a first direction and the second bar portion extending longitudinally in a second direction; and a pair of attachment mechanisms at opposite ends of the body, wherein a first attachment mechanism of the pair of attachment mechanisms includes a hook end portion extending from the first bar portion; a hook portion extending from the hook end portion in an arcuate shape; a hook tip defining an end of the hook portion, the hook tip extending towards the first bar portion, wherein the hook tip, the hook portion, and the hook tip define a receiving aperture; a first protrusion extending longitudinally from a first end of an upper surface of the first bar portion, and away from the first bar portion; and a second protrusion extending longitudinally in parallel to the first protrusion, from a second end of the upper surface of the first bar portion, the first protrusion connected to the second protrusion via an intermediary portion, wherein the first protrusion, the second protrusion, and the intermediary portion define a cavity.
Clause 18. The sling bar of Clause 17, wherein the hook tip has at least one of a flat shape or a cylindrical shape.
Clause 19. The sling bar of any of Clauses 17-18, wherein the hook tip extends at least partially into the cavity, and wherein each of the first protrusion and the second protrusion surround a portion of the hook tip.
Clause 20. The sling bar of any of Clauses 17-19, wherein the first protrusion is a first protruding member, and the second protrusion is a second protruding member.
Clause 21. The sling bar of any of Clauses 17-20, wherein the first protrusion connects in a downwards direction to a first end of a marginal perimeter to form a first connection; the second protrusion connects in a downwards direction to a second end of a marginal perimeter to form a second connection; the intermediary portion connects in a downwards direction to at an interior central portion to form a third connection; and the first connection and the second connection are connected via the third connection to define a cavity side wall of the cavity.
Clause 22. The sling bar of any of Clauses 17-21, wherein the first protrusion includes a prominence extending longitudinally beyond a first end of the cavity side wall; and the second protrusion includes a prominence extending longitudinally beyond a second end of the cavity side wall.
Clause 23. A sling bar including a body including a first bar portion and a second bar portion, the first bar portion extending longitudinally in a first direction and the second bar portion extending longitudinally in a second direction; and a pair of attachment mechanisms at opposite ends of the body, wherein a first attachment mechanism of the pair of attachment mechanisms includes a hook end portion extending from the first bar portion; a hook portion extending from the hook end portion in an arcuate shape; a hook tip defining an end of the hook portion, the hook tip extending towards the first bar portion, wherein the hook tip, the hook portion, and the hook tip define a receiving aperture; and a covering latch placed in the first bar portion, the covering latch including a compression lid configured to be depressable into a crevice of the first bar portion to place the receiving aperture in an open position.
Clause 24. The sling bar of Clause 23, wherein the hook tip has at least one of a flat shape or a cylindrical shape.
Clause 25. The sling bar of Clause 23, wherein the covering latch further includes a base affixed inside the crevice of the first bar portion, wherein the compression lid is coupled onto the base via an attachment portion of the covering latch.
Clause 26. The sling bar of any of Clauses 17-25, wherein the attachment portion includes a spring configured to allow depression of the compression lid onto the base.
Clause 27. The sling bar of any of Clauses 17-26, wherein the compression lid includes a receiving end configured to receive at least one portion of the hook tip.
Clause 28. The sling bar of any of Clauses 17-27, wherein releasing the compression lid causes the receiving end to receive a portion of the hook tip and place the receiving aperture in a closed position.
Clause 29. The sling bar of any of Clauses 17-28, wherein a length of the at least one portion of the hook tip is at least 18 millimeters.
Clause 30. The sling bar of any of Clauses 17-28, wherein a length of the at least one portion of the hook tip is at least 28 millimeters.
Clause 31. A person lifting system, including a motor configured to lift a person; a sling bar configured to be attached to a sling for holding a person; wherein the sling bar includes at least one attachment mechanism at an end of the sling bar including a hook end portion; a hook portion extending from the hook end portion in an arcuate shape; a hook tip defining an end of the hook portion, the hook tip extending towards a first direction, wherein the hook tip, the hook portion, and the hook tip define a receiving aperture; a first protrusion extending longitudinally towards a second direction; and a second protrusion extending longitudinally in parallel to the first protrusion, the first protrusion connected to the second protrusion via an intermediary portion, wherein the first protrusion, the second protrusion, and the intermediary portion define a cavity.
Clause 32. The person lifting system of Clause 31, further including a strap movable by the motor.
Clause 33. The person lifting system of any of Clauses 31-32, wherein the first protrusion is a first protruding member, and the second protrusion is a second protruding member.
Clause 34. The person lifting system of any of Clauses 31-33, wherein the hook tip has at least one of a flat shape or a cylindrical shape.
Clause 35. The person lifting system of any of Clauses 31-34, wherein the hook tip extends at least partially into the cavity.
Clause 36. The person lifting system of any of Clauses 31-35, wherein each of the first protrusion and the second protrusion surround a portion of the hook tip.
Clause 37. The person lifting system of any of Clauses 31-36, wherein the first protrusion connects in a downwards direction to a first end of a marginal perimeter to form a first connection; the second protrusion connects in a downwards direction to a second end of the marginal perimeter to form a second connection; the intermediary portion connects in a downwards direction to at an interior central portion to form a third connection; and the first connection and the second connection are connected via the third connection to define a cavity side wall of the cavity.
Clause 38. The person lifting system of any of Clauses 31-37, wherein the first protrusion includes a prominence extending longitudinally beyond a first end of the cavity side wall; and the second protrusion includes a prominence extending longitudinally beyond a second end of the cavity side wall.
Clause 39. A person lifting system, including a lift member movable by a motor; a sling bar configured to be attached to a sling for holding a person; wherein the sling bar includes at least one attachment mechanism at an end of the sling bar including a hook end portion; a hook portion extending from the hook end portion in an arcuate shape; a hook tip defining an end of the hook portion, the hook tip extending towards a first direction, wherein the hook tip, the hook portion, and the hook tip define a receiving aperture; and a covering latch including a compression lid configured to be depressable into a crevice to place the receiving aperture in an open position.
Clause 40. The person lifting system of Clause 39, further including a strap movable by the motor.
Clause 41. The person lifting system of any of Clauses 39-40, wherein the arcuate shape defines the hook portion extending downwardly followed by curving upwardly.
Clause 42. The person lifting system of any of Clauses 39-41, wherein the hook tip has at least one of a flat shape or a cylindrical shape.
Clause 43. The person lifting system of any of Clauses 39-42, wherein the covering latch further includes a base affixed inside the crevice, wherein the compression lid is coupled onto the base via an attachment portion of the covering latch.
Clause 44. The attachment mechanism of any of Clauses 39-43, wherein the attachment portion includes a spring configured to allow depression of the compression lid onto the base.
Clause 45. The person lifting system of any of Clauses 39-44, wherein the compression lid includes a receiving end, wherein the receiving end is configured to receive at least one portion of the hook tip.
Clause 46. The person lifting system of any of Clauses 39-45, wherein releasing the compression lid causes the receiving end to receive a portion of the hook tip and place the receiving aperture in a closed position.
Clause 47. The person lifting system of any of Clauses 39-46, wherein a length of the at least one portion of the hook tip is at least 18 millimeters.
Clause 48. The person lifting system of any of Clauses 39-47, wherein a length of the at least one portion of the hook tip is at least 28 millimeters.
Clause 49. A sling bar including a first body including a first bar portion and a second bar portion, the body having a plurality of ends, the first bar portion extending in a first direction and including a first end of the plurality of ends and the second bar portion extending in a second direction and including a second end of the plurality of ends; and attachment mechanisms at different ends of the plurality of ends, wherein a first attachment mechanism of the attachment mechanisms includes a hook end portion extending from the first bar portion; a hook portion extending from the hook end portion in an arcuate shape; a hook tip defining an end of the hook portion, the hook tip extending towards the first bar portion, wherein the hook tip, the hook portion, and the hook tip define a receiving aperture; a first protrusion extending longitudinally from a first end of an upper surface of the first bar portion, and away from the first bar portion; and a second protrusion extending longitudinally in parallel to the first protrusion, from a second end of the upper surface of the first bar portion, the first protrusion connected to the second protrusion via an intermediary portion, wherein the first protrusion, the second protrusion, and the intermediary portion define a cavity.
Clause 50. The sling bar of Clause 49, wherein the first body comprising the first bar portion and second bar corresponds to a first curved bar.
Clause 51. The sling bar of any of Clauses 49-50, wherein the sling bar further includes a second body comprising a third bar portion and a fourth bar portion, the third bar portion extending in a third direction and comprising a third end of the plurality of ends and the fourth bar portion extending in a fourth direction and comprising a fourth end of the plurality of ends, wherein the second body corresponds to a second curved bar, and wherein the first curved bar and the second curved bar are coupled together via a central coupling mechanism in a cross-bar configuration.
Clause 52. The sling bar of any of Clauses 49-51, wherein the central coupling mechanism includes an aperture for receiving a buckle receiver.
Clause 53. The sling bar of any of Clauses 49-52, wherein the sling bar further includes a second body including a third bar portion and a fourth bar portion, the third bar portion extending in the first direction and including a third end of the plurality of ends and the fourth bar portion extending in the second direction and including a fourth end of the plurality of ends, and wherein the body and the second body are coupled together via a central coupling mechanism in a parallel configuration.
Clause 54. The sling bar of any of Clauses 49-53, wherein the first attachment mechanism further includes a covering latch placed in the first bar portion, the covering latch including a compression lid configured to be depressable into a crevice of the first bar portion to place the receiving aperture in an open position.
Clause 55. The sling bar of any of Clauses 49-54, wherein the first body is longer than the second body.
Clause 56. The sling bar of any of Clauses 49-55, wherein the hook tip has at least one of a flat shape or a cylindrical shape.
Clause 57. The sling bar of any of Clauses 49-56, wherein the hook tip extends at least partially into the cavity, and wherein each of the first protrusion and the second protrusion surround a portion of the hook tip.
Clause 58. The sling bar of any of Clauses 49-57, wherein the first protrusion is a first protruding member, and the second protrusion is a second protruding member.
Clause 59. The sling bar of any of Clauses 49-58, wherein the first protrusion connects in a downwards direction to a first end of a marginal perimeter to form a first connection; the second protrusion connects in a downwards direction to a second end of a marginal perimeter to form a second connection; the intermediary portion connects in a downwards direction to at an interior central portion to form a third connection; and the first connection and the second connection are connected via the third connection to define a cavity side wall of the cavity.
Clause 60. The sling bar of Clause 59, wherein the first protrusion includes a prominence extending longitudinally beyond a first end of the cavity side wall; and the second protrusion includes a prominence extending longitudinally beyond a second end of the cavity side wall.

## Claims

1. An attachment mechanism comprising:
a hook end portion;
a hook portion extending from the hook end portion in an arcuate shape;
a hook tip defining an end of the hook portion, the hook tip extending towards a first direction, wherein the hook tip, the hook portion, and the hook tip define a receiving aperture;
a first protrusion extending longitudinally towards a second direction; and
a second protrusion extending longitudinally in parallel to the first protrusion, the first protrusion connected to the second protrusion via an intermediary portion, wherein the first protrusion, the second protrusion, and the intermediary portion define a cavity.

2. The attachment mechanism of claim 1, wherein the first protrusion is a first protruding member, and the second protrusion is a second protruding member.

3. The attachment mechanism of any of claims 1-2, wherein the hook tip has at least one of a flat shape or a cylindrical shape.

4. The attachment mechanism of any of claims 1-3, wherein the hook tip extends at least partially into the cavity, wherein each of the first protrusion and the second protrusion surround a portion of the hook tip.

5. The attachment mechanism of any of claims 1-4, wherein:
the first protrusion connects in a downwards direction to a first end of a marginal perimeter to form a first connection;
the second protrusion connects in a downwards direction to a second end of the marginal perimeter to form a second connection;
the intermediary portion connects in a downwards direction to at an interior central portion to form a third connection; and
the first connection and the second connection are connected via the third connection to define a cavity side wall of the cavity.

6. The attachment mechanism of any of claims 1-5, wherein:
the first protrusion comprises a prominence extending longitudinally beyond a first end of the cavity side wall; and
the second protrusion comprises a prominence extending longitudinally beyond a second end of the cavity side wall.

7. An attachment mechanism of any of claims 1-6 further comprising
a covering latch comprising a compression lid configured to be depressable into a crevice to place the receiving aperture in an open position.

8. The attachment mechanism of claim 7, wherein the arcuate shape defines the hook portion extending downwardly followed by curving upwardly.

9. A sling bar comprising:
a first body comprising a first bar portion and a second bar portion, the first body having a plurality of ends, the first bar portion extending in a first direction and comprising a first end of the plurality of ends and the second bar portion extending in a second direction and comprising a second end of the plurality of ends; and
attachment mechanisms at different ends of the plurality of ends, wherein a first attachment mechanism of the attachment mechanisms comprises:
a hook end portion extending from the first bar portion;
a hook portion extending from the hook end portion in an arcuate shape;
a hook tip defining an end of the hook portion, the hook tip extending towards the first bar portion, wherein the hook tip, the hook portion, and the hook tip define a receiving aperture;
a first protrusion extending longitudinally from a first end of an upper surface of the first bar portion, and away from the first bar portion; and
a second protrusion extending longitudinally in parallel to the first protrusion, from a second end of the upper surface of the first bar portion, the first protrusion connected to the second protrusion via an intermediary portion, wherein the first protrusion, the second protrusion, and the intermediary portion define a cavity.

10. The sling bar of claim 9, wherein the first body comprising the first bar portion and the second bar portion corresponds to a first curved bar.

11. The sling bar of any of claims 9-10, wherein the sling bar further comprises:
a second body comprising a third bar portion and a fourth bar portion, the third bar portion extending in a third direction and comprising a third end of the plurality of ends and the fourth bar portion extending in a fourth direction and comprising a fourth end of the plurality of ends, wherein the second body corresponds to a second curved bar, and wherein the first curved bar and the second curved bar are coupled together via a central coupling mechanism in a cross-bar configuration.

12. The sling bar of any of claims 9-11, wherein the central coupling mechanism comprises an aperture for receiving a buckle receiver.

13. The sling bar of any of claims 9-12, wherein the sling bar further comprises:
a second body comprising a third bar portion and a fourth bar portion, the third bar portion extending in the first direction and comprising a third end of the plurality of ends and the fourth bar portion extending in the second direction and comprising a fourth end of the plurality of ends, and wherein the first body and the second body are coupled together via a central coupling mechanism in a parallel configuration.

14. The sling bar of any of claims 9-13, wherein the first attachment mechanism further comprises a covering latch placed in the first bar portion, the covering latch comprising a compression lid configured to be depressable into a crevice of the first bar portion to place the receiving aperture in an open position.

15. The sling bar of any of claims 9-14, wherein the first body is longer than the second body.
